# EUROPEAN PATENT SPECIFICATION

(11) **EP 1 634 424 B1**
(45) Date of publication and mention of the grant of the patent: **09.11.2011**
(21) Application number: 04754666.8
(22) Date of filing: 08.06.2004
(51) Int. Cl.: H04L 29/06

(54) **METHODS AND APPARATUSES FOR OPTIMIZING RESOURCE MANAGEMENT IN CDMA2000 WIRELESS IP NETWORKS**
METHODEN UND VORRICHTUNGEN FÜR OPTIMISIERUNG DER RESOURCENVERWALTUNG IN DRAHTLOSEN IP CDMA2000 NETZEN
PROCEDES ET DISPOSITIFS PERMETTANT D'OPTIMISER LA GESTION DES RESSOURCES DANS DES RESEAUX IP SANS FIL CDMA2000

(30) Priority: 19.06.2003 US 600157
(43) Date of publication of application: 15.03.2006
(73) Proprietor: Cisco Technology, Inc., San Jose, CA 95134-1706 (US)
(72) Inventor: CHANDRA, Madhavi, W., Cary, NC 27519 (US); LEUNG, Kent, K., Mountain View, CA 94040 (US); YEGANI, Parviz, Danville, CA 94506 (US)
(74) Representative: Kazi, Ilya
(86) International application number: PCT/US2004/018114
(87) International publication number: WO 2004/114632

(56) References cited:
- WO-A1-03/030483
- "TIA/IS-835-B, CDMA2000 WIRELESS IP NETWORK STANDARD" TIA/EIA INTERIM STANDARD, XX, XX, September 2002 (2002-09), pages 1-111, XP002288685 cited in the application
- BHALLA R ET AL: "Releasing Resources in Mobile IP" INTERNET-DRAFT, 27 February 2001 (2001-02-27), XP002233385 INTERNET
- CHIBA M ET AL: "Dynamic Authorization Extensions to Remote Authentication Dial-In User Service (RADIUS)" August 2002 (2002-08), INTERNET-DRAFT , INTERNET , XP002298065 * sections 1.0-2.3 on pages 2-4 *

## Description

### BACKGROUND OF THE INVENTION

### Field of the Invention

The present invention relates to Mobile IP network technology. More particularly, the present invention relates to optimizing resource management at a Packet Data Serving Node.

### Description of the Related Art

Mobile IP is a protocol that allows laptop computers and other mobile computer units ("mobile nodes") to roam between various sub-networks while maintaining Internet and/or WAN connectivity. Without Mobile IP or similar protocols a mobile node would be unable to stay connected while roaming from one location serviced by one sub-network to another location being serviced by a different sub-network. This is because each IP address has a field that specifies the particular sub-network on which the node resides. If a user desires to take a computer that is normally attached to one node and roam so that it passes through different sub-networks, the roaming computer cannot use its home base IP address. As a result, a businessperson traveling across the country cannot travel with his or her computer across geographically disparate network segments or wireless nodes while maintaining Internet connectivity. This is not acceptable in the age of portable computational devices.

To address this problem, the Mobile IP protocol has been developed and implemented. An implementation of Mobile IP is described in RFC 3220, "IP Mobility Support for IPv4" of the Network Working Group, C. Perkins, Ed., January 2002. Mobile IP is also described in the text "Mobile IP, The Internet Unplugged" by J. Solomon, Prentice Hall, 1998.

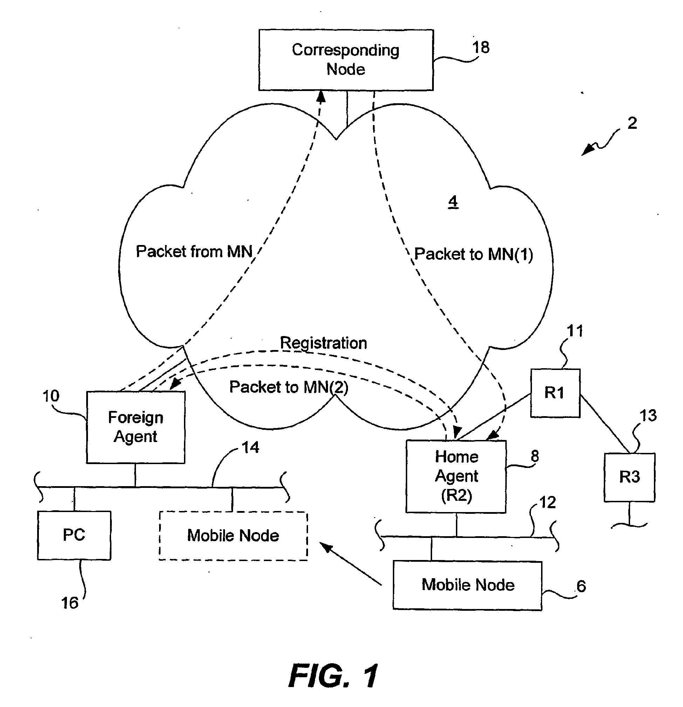

The Mobile IP process and environment are illustrated in FIG. 1. A Mobile IP environment 2 includes the Internet (or a WAN) 4 over which a mobile node 6 can communicate via mediation by a home agent 8 or a foreign agent 10. Typically, the home agent 8 and foreign agent 10 are routers or other network connection devices performing appropriate Mobile IP functions as implemented by software, hardware, and/or firmware. Note the overall network topology is arbitrary, and elements such as the home agent 8 need not directly connect to the Internet 4. For example, the home agent 8 may be connected through another router R1 11. Router R1 11 may, in turn, connect one or more other routers R3 13 with the Internet 4.

When mobile node 6 is plugged into its home network segment 12 it connects with the Internet 4 through its designated home agent 8. When the mobile node 6 roams, it can be connected to a remote network segment 14 and communicate through the available foreign agent 10. Other nodes, such as a PC 16, on remote network segment 14 also communicate with the Internet 4 through foreign agent 10. Presumably, there are many foreign agents available at geographically disparate locations to allow wide spread Internet connection via the Mobile IP protocol.

Mobile node 6 may identify foreign agent 10 through various agent solicitations and agent advertisements that form part of the Mobile IP protocol. When mobile node 6 engages with remote network segment 14, it composes a registration request for the home agent 8 to bind the mobile node's 6 current location with its home location. Foreign agent 10 then relays the registration request to home agent 8. During the registration process, the home agent 8 and the mobile node 6 may then negotiate the conditions of the mobile node's 6 attachment to foreign agent 10. For example, the mobile node 6 may request a registration lifetime of 5 hours, but the home agent 8 may grant only a 3 hour period. When the negotiation is successfully completed, home agent 8 updates an internal "mobility binding table" which links the mobile node's 6 current location via its care-of address (e.g., a co-located care-of address or the foreign agent's IP address) to the identity (e.g., home address) of the mobile node 6. Further, if the mobile node 6 registered via foreign agent 10, the foreign agent 10 updates an internal "visitor table" which specifies the mobile node address, home agent address, etc. The home agent's 8 association between a mobile node's home base IP address, its current care-of address, and the remaining lifetime of that association is referred to as a binding.

If mobile node 6 wanted to send a message to a correspondent node 18 from its new location, the mobile node 6 would forward a packetized output message through the foreign agent 10 over the Internet 4 to the correspondent node 18 according to standard Internet protocols. However, if the correspondent node 18 wanted to send a message to the mobile node 6 -- whether in reply to a message from the mobile node 6 or for any other reason -- the correspondent node 18 addresses that message to the IP address of the mobile node 6 as if the mobile node 6 were on the home network segment 12. The packets of the message from the correspondent node 18 are forwarded over the Internet 4 to the router R1 11 and ultimately to the home agent 8.

From the home agent's 8 mobility binding table, the home agent 8 recognizes that the mobile node 6 is no longer attached to the home network segment 12. The home agent 8 then encapsulates the packets from correspondent node 18 (which are addressed to the mobile node 6 on the home network segment 12) according to the Mobile IP protocol, and forwards these encapsulated packets to the appropriate care-of address for mobile node 6. If the care-of address is the IP address of the foreign agent 10 the foreign agent 10 strips the encapsulation and forwards the message to the mobile node 6 on the remote network segment 14. The packet forwarding mechanism implemented by the home agent 8 to the foreign agent 10 is often referred to as "tunneling."

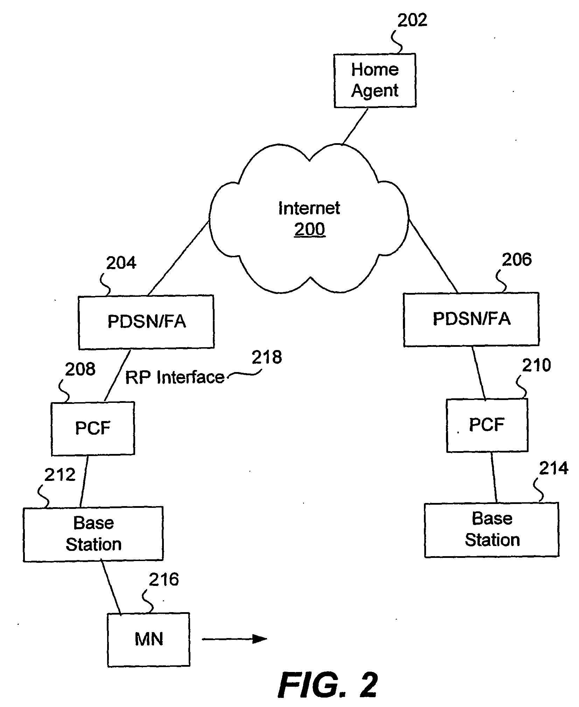

FIG. 2 is a diagram illustrating a CDMA2000^{™} wireless IP network. As shown, a Home Agent 202 is connected to the IP network, or Internet 200. A Packet Data Serving Node (PDSN) provides access to the Internet, intranets and applications servers for mobile nodes utilizing a CDMA2000^{™} Radio Access Network (RAN), and operates in accordance with the cdma2000 Wireless IP Network Standard, TIA/EIA/IS-835-B, September 2002.

Acting as an access gateway, the PDSN provides simple IP and mobile IP access, foreign agent support, and packet transport for virtual private networking. It also acts as a client for Authentication, Authorization, and Accounting (AAA) servers and provides mobile nodes with a gateway to the IP network. Each PDSN supports layer 3 mobility using Mobile IP protocol and is primarily responsible for the following functions:
- Establish, maintain, and terminate PPP session to the mobile node
- Assign/provide IP address for Simple IP (the dynamic address may be chosen by the PDSN or AAA)
- Support Foreign Agent functionality
- Initiate authentication, authorization, and accounting to the AAA for the mobile node
- For Simple IP, map the mobile node IP address with a unique layer connection used to communicate with the PCF. For Mobile IP, map the mobile node IP and HA addresses with a unique link layer identifier used to communicate with the PCF
- For Mobile IP, optionally, interact with a previous PDSN to support handoffs between PDSNs (including fast handoff)
- Route packets to IP networks or directly to the HA in the case of reverse turmeling
- Interact with the PCF to establish, maintain and terminate the layer 2 connection between PCF and PDSN
- Mark and process packets as necessary according to the QoS profile
- Optionally send Agent Advertisement(s) if the PCF indicates the mobile node has undergone a dormant handoff

AAA servers are capable of storing security-associations for multiple Home Agents, as well as provide further services. By way of example, the centralized server may provide authentication services and/or authorization services. While authentication determines who an entity is, authorization determines what services a user is allowed to perform, or access. Various protocols such as the Remote Authentication Dial In User Service (RADIUS) and TACACS+ may be implemented to provide such a server, In addition, this protocol may similarly be implemented on each Home Agent that communicates with the server. RFC 2865 describes the RADIUS Protocol. Similarly, RFC 1492 describes TACACS and the Internet-Draft "The TACACS+ Protocol Version 1.78," available at http://www.ietf.org/internet-drafts/draft-grant-tacacs-02.txt, describes TACACS+.

In this example, two different PDSNs, 204 and 206 are connected to the Internet 200. A Packet Control Function (PCF) is an entity in a radio access network that provides a layer 2 signaling connection and one or more bearer connections between the Base Station (BS) and the PDSN. In this example, two different PCFs 208 and 210 control transmission of user traffic between corresponding base stations 212 and 214, respectively, and the PDSNs 204 and 206, respectively. Each PCF supports layer 2 mobility and is primarily responsible for the following functions:
- Establish maintain and terminate layer 2 connection to the PDSN
- Interact with the PDSN to support dormant handoff
- Maintain knowledge of radio resource status (e.g. active, dormant)
- Buffer packets arriving from the PDSN when radio resources are not in place or are insufficient to support the flow from the PDSN
- Communicate with the base station to request and manage radio resources in order to relay packets to/from the mobile node and the PDSN
- Collect and send airlink related accounting information to the PDSN

The Wireless IP Network Standard as defined in IS-835 [1] defines PDSN procedures for managing a Point-to-Point Protocol (PPP) session for a mobile node. For instance, when the Radio Network sends a request to the PDSN to set up a new R-P connection, the PDSN initiates establishment of a PPP session. When a Mobile Node 216 establishes a PPP session 220 with the PDSN 204, the PDSN 204 stores PPP state information. The PPP state information is defined in RFC 1661, "The Point-to-Point protocol (PPP)," Simpson et al, July 1994.

For instance, the PPP state information may include a PPP session timer, LCP/IPCP state, etc.

As the mobile node moves from one foreign domain serviced by a PDSN (source PDSN), shown here as PDSN 204, to another PDSN (target PDSN), shown here as PDSN 206, during an inter-PDSN hand-off a new PPP session is established at the target PDSN. Specifically, when the node moves or the Mobile Node 216 roams such that the PDSN 206 initiates a second PPP session, PPP state information is stored at the target PDSN 206. Thus, the first PDSN 204 no longer needs to store the PPP state information. Unfortunately, the first PDSN 204 does not release its PPP resources until the PPP session timer has expired. Since the timer may be set to a long value, for example it may expire as much as several hours after the node or mobile node has moved to another PDSN, the PPP state information may be unnecessarily stored by the first PDSN 204 during this time. Maintaining these PPP sessions and associated resources may consume valuable resources at the source PDSN that could otherwise be used to support additional mobile nodes. Since the resources available at the PDSN 204 are limited, this reduces the number of sessions the PDSN 204 can handle.

In view of the above, it would be desirable if a mechanism were available to increase the number of sessions a PDSN can support through optimizing resource management at the PDSN.

Bhalla R. *et al.* "Releasing resources in mobile IP" Internet Draft, teaches the use of a home agent to send a resource release message to a foreign agent following a change in the care of address for a mobile node.

International Application Publication Number WO03/030483 describes a system in which a session key is generated at the service provider's system for a given data session, and returned to the mobile device. Each time the mobile device communicates with the service provider, it enters this session key into a field that will simply pass through the communication network to the service provider.

### SUMMARY OF THE INVENTION

An invention is disclosed that optimizes resource management within a PDSN. This is accomplished through the modification of functions of a AAA server. When the PDSN. receives a disconnect request from the AAA server, it may then disconnect a session and release associated resources.

According to a first aspect of the present invention, there is provided a method of releasing resources performed in a Packet Data Serving Node, PDSN, comprising: sending an access request message to a first Authentication, Authorisation and Accounting, AAA, server for authentication of a node; receiving an access accept message from the first AAA server; establishing a Mobile Internet Protocol, IP, session as a Foreign Agent for the node when an access accept message is received from the first AAA server; storing information associated with the node in resources associated with the PDSN; receiving a disconnect request message from the first AAA server; and releasing the resources when the disconnect request message is received.

According to a second aspect of the present invention, there is provided a method performed in an Authentication, Authorisation and Accounting, AAA, server of initiating the release of resources in a first Packet Data Serving Node, PDSN, comprising: receiving an access request message from a second PDSN, the access request message including a username identifier identifying a user, a session identifier identifying a session associated with the user, and a PDSN identifier identifying the first PDSN; sending an access accept message to the second PDSN in response to the access request message; and sending a disconnect request message to the first PDSN indicating a request to release resources associated with the session.

According to a third aspect of the present invention, there is provided a method performed in a first Authentication, Authorisation and Accounting, AAA, server of initiating the release of resources in a first Packet Data Serving Node, PDSN, comprising; receiving an access accept message from a second AAA server, the access accept message including a username identifier identifying a user, a session identifier identifying a session associated with the user, and a PDSN identifier identifying the first PDSN; and sending a disconnect request message to the PDSN identifier identifying the first PDSN, the disconnect request message indicating a request to release resources associated with the session.

According to a fourth aspect of the present invention, there is provided a Packet Data Serving Node, PDSN, adapted for releasing resources, comprising: means for sending an access request message to a first Authentication, Authorisation and Accounting, AAA, server for authentication of a node; means for receiving an access accept message from the first AAA server; means for establishing a Mobile Internet Protocol, IP, session as a Foreign Agent for the node when an access accept message is received from the first AAA server; means for storing information associated with the node in resources associated with the PDSN; means for receiving a disconnect request message from a first AAA server; and means for releasing the resources when the disconnect request message is received.

According to a fifth aspect of the present invention, there is provided an Authentication, Authorisation and Accounting, AAA, server, adapted for initiating the release of resources in a first Packet Data Serving Node, PDSN, comprising: a processor; and a memory, at least one of the processor and the memory being adapted for: receiving an access request message from a second PDSN, the access request message including a username identifier identifying a user, a session identifier identifying a session associated with the user, and a PDSN identifier identifying the first PDSN; sending an access accept message to the second PDSN in response to the access request message; and sending a disconnect request message to the first PDSN indicating a request to release resources associated with the session.

According to a sixth aspect of the present invention, there is provided an Authentication, Authorisation and Accounting, AAA, server adapted for initiating the release of resources in a first Packet Data Serving Node, PDSN, comprising: a processor; and a memory, at least one of the processor and the memory being adapted for: receiving an access accept message from a second AAA server, the access accept message including a username identifier identifying a user, a session identifier identifying a session associated with the user, and a PDSN identifier identifying the first PDSN; and sending a disconnect request message to the PDSN identifier identifying the first PDSN, the disconnect request message indicating a request to release resources associated with the session.

Various network devices may be configured or adapted for intercepting, generating, modifying and transmitting packets, messages and data structures to implement the disclosed methods. These network devices include, but are not limited to, servers (e.g., hosts) and routers. Moreover, the functionality for the disclosed processes may be implemented in software as well as hardware.

Yet another aspect of the invention pertains to computer program products including machine-readable media on which are provided program instructions for implementing the methods and techniques described above, in whole or in part. Any of the methods of this invention may be represented, in whole or in part, as program instructions that can be provided on such machine-readable media. In addition, the invention pertains to various combinations and arrangements of data generated and/or used as described herein. For example, packets and data structures having the format described herein and provided on appropriate media are part of this invention.

These and other features of the present invention will be described in more detail below in the detailed description of the invention and in conjunction with the following figures.

### BRIEF DESCRIPTION OF THE DRAWINGS

FIG. 1 is a block diagram of a Mobile IP environment;
FIG. 2 is a diagram illustrating a CDMA2000^{™} wireless IP network.
FIG. 3 is a transaction flow diagram illustrating a first method of optimizing resource management in a wireless IP network such as that illustrated in FIG. 2 in accordance with various embodiments of the invention.
FIG. 4 is a transaction flow diagram illustrating a second method of optimizing resource management in a wireless IP network such as that illustrated in FIG. 2 in accordance with various embodiments of the invention.
FIG. 5 is a diagram illustrating an exemplary disconnect request message transmitted by a AAA server in accordance with various embodiments of the invention.
FIG. 6 is a diagram illustrating an exemplary disconnect acknowledgement message transmitted by a PDSN in accordance with various embodiments of the invention.
FIG. 7 is a diagram illustrating an exemplary disconnect NAK message transmitted by a PDSN in accordance with various embodiments of the invention.
FIG. 8 is a diagram illustrating an exemplary network device in which various embodiments of the invention may be implemented.

### DETAILED DESCRIPTION OF THE PREFERRED EMBODIMENT

In the following description, numerous specific details are set forth to provide a thorough understanding of the present invention. It will be obvious, however, to one skilled in the art that the present invention may be practiced without some or all of these specific details. In other instances, well known process steps have not been described in detail in order to avoid unnecessarily obscuring the present invention.

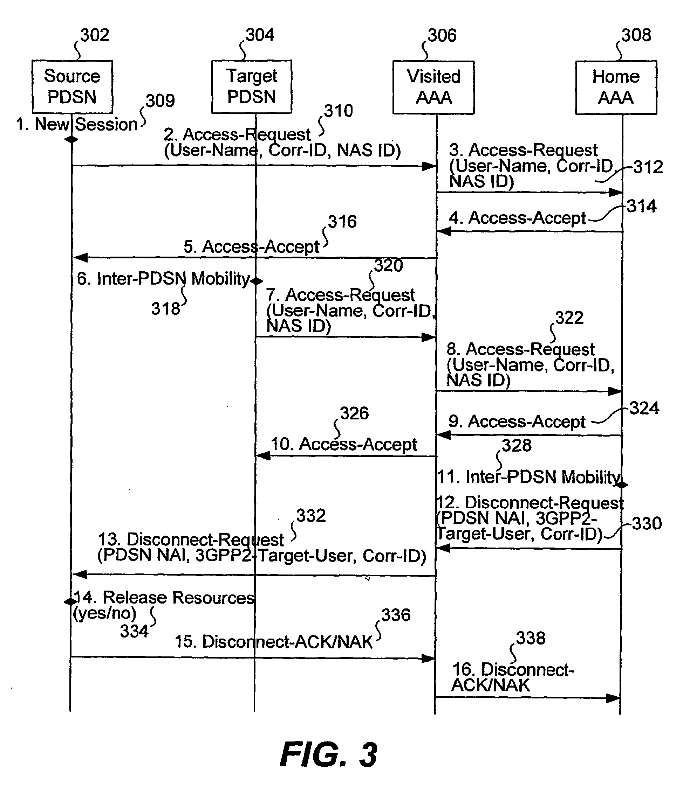

FIG. 3 is a transaction flow diagram illustrating a first method of optimizing resource management in a wireless IP network such as that illustrated in FIG. 2 in accordance with various embodiments of the invention. Process steps performed by the source PDSN, target PDSN, a first AAA server (e.g., visited AAA server), and a second AAA server (e.g., home AAA server) are described with reference to vertical lines 302, 304, 306, and 308, respectively. As described in US6,760,444, filed on January 8, 1999, by inventor Kent K. Leung, a AAA server may be used to authenticate a mobile node. The visited AAA server is a AAA server located in a foreign network, while the home AAA server is a AAA server located in the home network. In the embodiment illustrated in FIG. 3, the two different AAA servers are used to notify the source PDSN that resources such as those used to store PPP state and other associated information are no longer needed. However, it is important to note that a single AAA server (e.g., home AAA server) may also be used.
As shown, the source PDSN 302 establishes a new PPP session at 309 with the mobile node. When the mobile node establishes the PPP session, it submits its username or Network Access Indentifier (NAI) in the PPP control messages during PAP or CHAP authentication negotiation. For instance, the username may be ioe@cisco.com In this manner, the source PDSN obtains the username of the mobile node. If the mobile node does not negotiate CHAP or PAP, then no NAI is received by the PDSN. In this case, the PDSN may construct a properly formatted NAI based on the mobile node identifier as provided in RFC 2486.

The first source PDSN sends an access request message such as a RADIUS access request message to a first AAA server for authentication of the node at 310. The first AAA server may, for example, be a visited AAA server 306. The RADIUS access request message includes the username identifier (e.g., joe@cjsco.com) that identifies a user associated with the PPP session (and Mobile IP session), a session identifier identifying a session associated with the user, session termination capability, and a PDSN identifier identifying the source PDSN (e.g., PDSN01.carrier.com). The session identifier or "correlation ID" is a unique number that is assigned by the PDSN to a particular session. The first AAA server 306 then forwards the access request message to the second AAA server, which is preferably a home AAA server located in the home network at 312.

Once the home AAA server 308 authenticates the mobile node, it sends an access accept packet such as a RADIUS access accept packet at 314 to the visited AAA server 306. Specifically, the access accept packet includes the username identifier identifying the user, the session identifier identifying the session to be disconnected, and the PDSN identifier identifying the source PDSN. The visited AAA server 306 then forwards the access accept message to the source PDSN at 316. The access accept message includes the username identifier identifying the user, the session identifier identifying a session associated with the user, and the PDSN identifier identifying the first PDSN.

When the source PDSN 302 receives the access accept message, it establishes a Mobile IP session as a Foreign Agent for the mobile node. During this time, the source PDSN 302 stores information associated with the node in resources associated with the PDSN. For instance, the resources may comprise memory and the - information may be, for example, PPP information associated with a PPP session and/or information associated with the Mobile IP session.

When the mobile node roams to the target PDSN 304, this inter-PDSN mobility is represented at 318. At this time, layer 3 mobility continues to be supported at the source PDSN 302. The target PDSN 304 then sends an access request message including the username identifier identifying the user, the session identifier identifying the session associated with the user, and the PDSN identifier identifying the source PDSN at 320. When the first, visited AAA server 306 receives the access request message from the target PDSN, it forwards the access request message to the home AAA server at 322. The home AAA server then sends an access accept message to the visited AAA server in response to the access request message at 324, which is then forwarded to the target PDSN at 326. As described above, the access accept packet includes the username identifier identifying the user, the session identifier identifying the session associated with the user, and the PDSN identifier identifying the source PDSN.

Once the second access accept packet is sent by the home AAA server at 324, inter-PDSN mobility is established at 328. The second home AAA server then sends a disconnect request message to the first source PDSN indicating a request for the release of resources associated with the session. In this example, the disconnect request is first sent to the first visited AAA server at 330, which is then forwarded to the source PDSN at 332.

The disconnect request message indicates that the resources associated with the specified session are no longer needed. In other words, the disconnect request message may indicate that a node (e.g., mobile node) associated with the user has moved. In accordance with one embodiment, the disconnect request message includes a source PDSN identifier identifying the source PDSN, a username identifier identifying the user, and a session identifier identifying a session (e.g., PPP session) associated with the user to be terminated by the first PDSN. Thus, the disconnect request message may request that the first source PDSN release the resources associated with the session identified by the session identifier. Note that resources associated with all other sessions for the same user may not be released.

In this example, the disconnect request message is triggered by the second access request message sent to the home AAA server by the target PDSN to which the node has roamed. Specifically, the disconnect request message is sent after an access accept message is sent by the home AAA server in response to the second access request message.

When the source PDSN receives the disconnect request message sent by the home AAA server, it releases all the resources associated with the session for which a disconnect message is received at 334. The source PDSN then sends a disconnect acknowledgement message or non-acknowledgement message. The ACK or NAK message may be sent to the visited AAA server or to the home AAA server. In this example, the ACK or NAK message is addressed to the home AAA server. When the ACK or NAK message is received by the visited AAA server at 336, it is forwarded to the home AAA server at 338. The disconnect acknowledgement message may indicate that the source PDSN has successfully terminated the session (and released the resources), while the non-acknowledgement message may indicate that the source PDSN is unable to terminate the session (and therefore unable to release the resources).

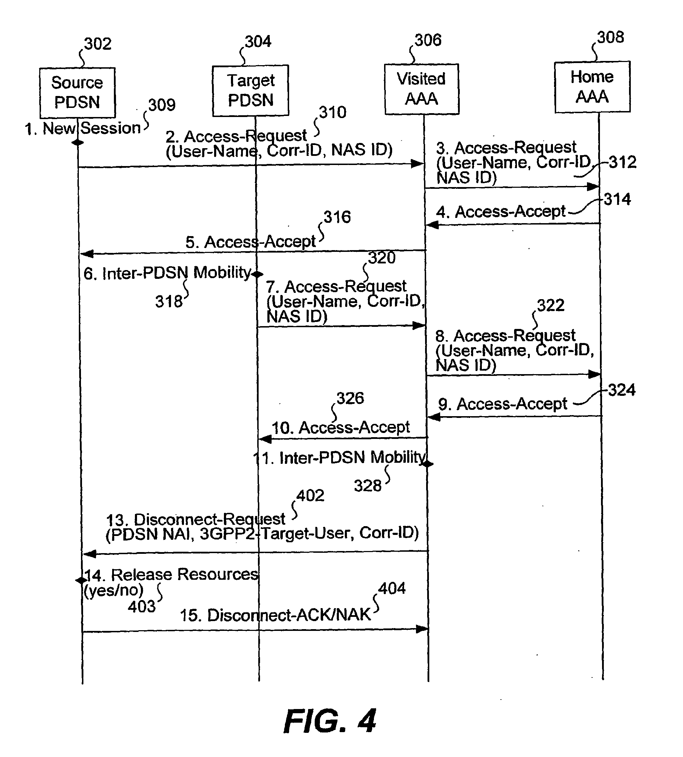

FIG. 4 is a transaction flow diagram illustrating a second method of optimizing resource management in a wireless IP network such as that illustrated in FIG. 2 in accordance with various embodiments of the invention. In the second embodiment, the present invention is optimized to reduce the transmission of messages between the visited AAA server 306 and the home AAA server 308. Specifically, when the access accept message sent from the home AAA server 308 is received at the visited AAA server at 324, the visited AAA server 306 sends a disconnect request to the source PDSN at 402. As described above, the access accept message preferably includes the username identifier identifying the user, the session identifier identifies the session associated with the user, and the PDSN identifier identifies the source PDSN. It is important to note that the access accept message preferably includes the PDSN identifier identifying the source PDSN, since the visited AAA server may not be the same as the previous visited AAA server, and therefore may not be aware of the identity of the source PDSN. In addition, the disconnect request message indicates a request to release resources associated with the session, as described above with reference to FIG. 3.

When the source PDSN receives the disconnect request, it terminates the session and releases resources associated with the session, if possible, at 403. The source PDSN then sends a disconnect acknowledgement or non-acknowledgement message at 404 to the visited AAA server. In this manner, the visited AAA server (or home AAA server as described above with reference to FIG. 3) may ascertain whether the resources were released. For instance, if the resources have not been released, the visited or home AAA server may choose to send another disconnect request message upon receipt of a non-acknowledgement message. In this manner, resource management is performed in the Foreign domain.

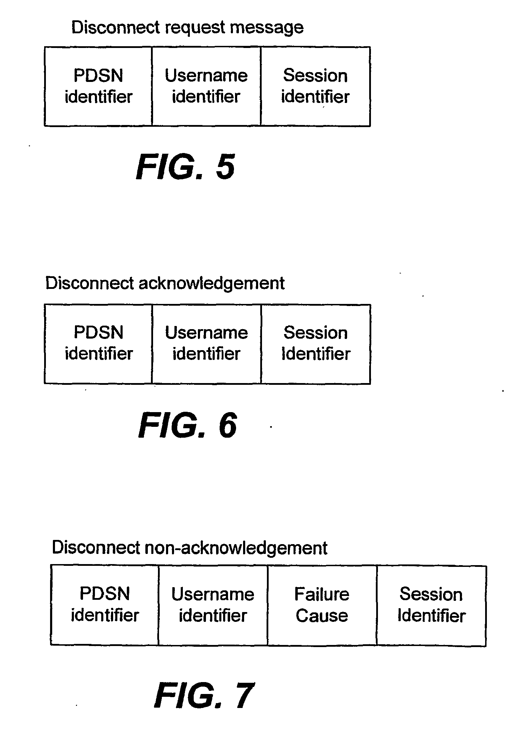

FIG. 5 is a diagram illustrating an exemplary disconnect request message transmitted by a AAA server in accordance with various embodiments of the invention. As shown in FIG. 5, the disconnect request message includes a source PDSN identifier identifying the source PDSN, a username identifier identifying a user associated with the Mobile IP session, and a session identifier identifying a session associated with the user to be terminated by the source PDSN.

FIG. 6 is a diagram illustrating an exemplary disconnect acknowledgement message transmitted by a PDSN in accordance with various embodiments of the invention. A disconnect acknowledgement message includes both the username and the session identifier, thereby enabling the AAA server to ascertain which session has been disconnected. FIG. 7 is a diagram illustrating an exemplary disconnect NAK message transmitted by a PDSN in accordance with various embodiments of the invention. A disconnect non-acknowledgement message includes a failure cause, as well as the username and the session identifier, thereby enabling the AAA server to ascertain which session could not be disconnected. In this manner, the AAA server may ascertain whether resources have been released. Formats of the above-described messages may be implemented in RADIUS or TACACS+. RADIUS disconnect request, ACK, and NAK messages are described in further detail in Chiba et al, http://www.draft-chiba-radius-dynamic-authorization-05.txt, "Dynamic Authorization Extensions to Remote Authentication Dial-In User Service (RADIUS)", August 2002.

In the above-described embodiments, the AAA servers may be RADIUS servers, as well as TACACS+ or other AAA servers. Moreover, the above-described messages are merely illustrative, and therefore other message formats may be used to communicate among the PDSNs and AAA servers.

Generally, the techniques of the present invention may be implemented on software and/or hardware. For example, they can be implemented in an operating system kernel, in a separate user process, in a library package bound into network applications, on a specially constructed machine, or on a network interface card. In a specific embodiment of this invention, the technique of the present invention is implemented in software such as an operating system or in an application running on an operating system.

A software or software/hardware hybrid implementation of the techniques of this invention may be implemented on a general-purpose programmable machine selectively activated or reconfigured by a computer program stored in memory. Such a programmable machine may be a network device designed to handle network traffic, such as, for example, a router or a switch. Such network devices may have multiple network interfaces including frame relay and ISDN interfaces, for example. Specific examples of such network devices include routers and switches. For example, home agents, and foreign agents of this invention may be implemented in specially configured routers, switches or servers, such as specially configured router models 2600, 3200, 3600, 4500, 7200, and 7500 available from Cisco Systems, Inc. of San Jose, California. A general architecture for some of these machines will appear from the description given below. In an alternative embodiment, the techniques of this invention may be implemented on a general-purpose network host machine such as a personal computer or workstation. Further, the invention may be at least partially implemented on a card (e.g., an interface card) for a network device or a general-purpose computing device.

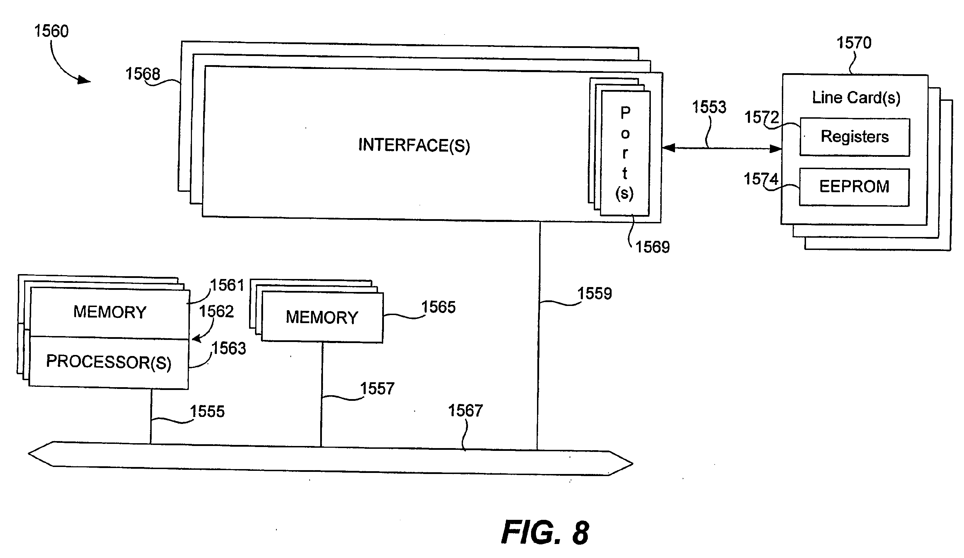

Referring now to FIG. 8, a network device 1500 suitable for implementing the techniques of the present invention includes a master central processing unit (CPU) 1505, interfaces 1510, memory 1515 and a bus 1520. When acting under the control of appropriate software or firmware, the CPU 1505 may be responsible for implementing specific functions associated with the functions of a desired network device. For example, when configured as an intermediate router, the CPU 1505 may be responsible for analyzing packets, encapsulating packets, and forwarding packets for transmission to a set-top box. The CPU 1505 preferably accomplishes all these functions under the control of software including an operating system (e.g. Windows NT), and any appropriate applications software.

CPU 1505 may include one or more processors such as those from the Motorola family of microprocessors or the MIPS family of microprocessors. In an alternative embodiment, the processor is specially designed hardware for controlling the operations of network device 1500.

The interfaces 1510 are typically provided as interface cards (sometimes referred to as "line cards"). Generally, they control the sending and receiving of data packets over the network and sometimes support other peripherals used with the network device 1500. Among the interfaces that maybe provided are Ethernet interfaces, frame relay interfaces, cable interfaces, DSL interfaces, token ring interfaces, and the like. In addition, various very high-speed interfaces may be provided such as fast Ethernet interfaces, Gigabit Ethernet interfaces, ATM interfaces, HSSI interfaces, POS interfaces, FDDI interfaces, ASI interfaces, DHEI interfaces and the like. Generally, these interfaces may include ports appropriate for communication with the appropriate media. In some cases, they may also include an independent processor and, in some instances, volatile RAM. The independent processors may control such communications intensive tasks as packet switching, media control and management. By providing separate processors for the communications intensive tasks, these interfaces allow the CPU 1505 to efficiently perform routing computations, network diagnostics, security functions, etc.

Although the system shown in FIG. 8 illustrates one specific network device of the present invention, it is by no means the only network device architecture on which the present invention can be implemented. For example, an architecture having a single processor that handles communications as well as routing computations, etc. is often used. Further, other types of interfaces and media could also be used with the network device.

Regardless of network device's configuration, it may employ one or more memories or memory modules (such as, for example, the memory 1515) configured to store data, program instructions for the general-purpose network operations and/or other information relating to the functionality of the techniques described herein. The program instructions may control the operation of an operating system and/or one or more applications, for example.

Because such information and program instructions may be employed to implement the systems/methods described herein, the present invention relates to machine readable media that include program instructions, state information, etc. for performing various operations described herein. Examples of machine-readable media include, but are not limited to, magnetic media such as hard disks, floppy disks, and magnetic tape; optical media such as CD-ROM disks; magneto-optical media such as floptical disks; and hardware devices that are specially configured to store and perform program instructions, such as read-only memory devices (ROM) and random access memory (RAM). The invention may also be embodied in a carrier wave traveling over an appropriate medium such as airwaves, optical lines, electric lines, etc. Examples of program instructions include both machine code, such as produced by a compiler, and files containing higher level code that may be executed by the computer using an interpreter.

Although illustrative embodiments and applications of this invention are shown and described herein, many variations and modifications are possible which remain within the concept, scope of the invention, and these variations would become clear to those of ordinary skill in the art after perusal of this application. For instance, the present invention is described as being configured to comply with Mobile IP standards in force as of the time this document was written However, it should be understood that the invention is not limited to such implementations. Accordingly, the present embodiments are to be considered as illustrative and not restrictive, and the invention is not to be limited to the details given herein, but may be modified within the scope and equivalents of the appended claims.

## Claims

1. A method of releasing resources performed in a Packet Data Serving Node, PDSN, (302), comprising:
sending an access request message (310) to a first Authentication, Authorisation and Accounting, AAA, server (306) for authentication of a node;
receiving an access accept message (316) from the first AAA server (306);
establishing a Mobile Internet Protocol, IP, session as a Foreign Agent for the node when an access accept message is received from the first AAA server (306);
storing information associated with the node in resources associated with the PDSN (302);
receiving a disconnect request message (332, 402) from the first AAA server wherein the disconnect request message (402) is received from a second AAA server (308) via the first AAA server (306), and the first AAA server is a visited AAA server associated with a foreign network; and,
releasing the resources when the disconnect request message (332, 402) is received.

2. The method as recited in claim 1, wherein the releasing resources step comprises releasing memory and the storing information step comprises storing Point-to-Point Protocol, PPP, information associated with a PPP session.

3. The method as recited in claim 1, wherein the releasing resources step comprises releasing memory and the storing information step comprises storing information associated with the Mobile IP session.

4. The method as recited in claim 1, wherein the first AAA server (306) is a visited AAA server associated with a foreign network and the second AAA server (308) is a home AAA server associated with a home network of the node.

5. The method as recited in claim 1, wherein the first AAA server (306) is a visited AAA server associated with a foreign network and the second AAA server (308) is the visited AAA server associated with the foreign network.

6. The method as recited in claim 1, wherein the access request message and access reply message are Remote Authentication Dial In User Service, RADIUS, messages, and the first and second AAA (306, 308) servers are RADIUS servers.

7. The method as recited in claim 1, wherein the disconnect request message (332, 402) comprises a source PDSN identifier identifying the PDSN (302), a username identifier identifying a user associated with the Mobile IP session, and a session identifier identifying a session associated with the user to be terminated by the PDSN (302).

8. The method as recited in claim 7, wherein the session is a PPP session.

9. The method as recited in claim 1, wherein the disconnect request message (402) is triggered by a second access request message (320) sent to the second AAA server (308) by a second PDSN (304) to which the node has roamed.

10. The method as recited in claim 9, wherein the disconnect request message (402) is sent after an access accept message (324) is sent by the second AAA server (308) to the first AAA server (306).

11. The method as recited in claim 9, wherein the access request message (310) and the second access request message (320) each comprise a RADIUS access request message including a username identifier identifying a user associated with the Mobile IP session, a session identifier identifying a session associated with the user, and a PDSN identifier identifying the PDSN (302).

12. The method as recited in claim 1, further comprising:
sending a disconnect acknowledgement message (336, 404) indicating that the PDSN (304) has successfully disconnected the user.

13. The method as recited in claim 12, wherein the disconnect acknowledgement message (336, 404) is sent to the first AAA server (306).

14. The method as recited in claim 1, further comprising:
sending a disconnect acknowledgement message (338) to the second AAA server (308), the disconnect acknowledgement message (338) indicating that the PDSN (302) has successfully disconnected the user.

15. The method as recited in claim 1, further comprising:
sending a disconnect non-acknowledgement message (336, 404) indicating that the PDSN (302) is unable to disconnect the user.

16. The method as recited in claim 15, wherein the disconnect non-acknowledgement message (336, 404) is sent to the first AAA server (306).

17. The method as recited in claim 1, further comprising:
sending a disconnect non-acknowledgement message (338) to the second AAA server (308), the disconnect non-acknowledgement message (338) indicating that the PDSN (302) is unable to disconnect the user.

18. A method performed in an Authentication, Authorisation and Accounting, AAA, server (306, 308) of initiating the release of resources in a first Packet Data Serving Node, PDSN, (302), comprising:
receiving an access request message (320) from a second PDSN (304), the access request message (320) including a username identifier identifying a user, a session identifier identifying a session associated with the user, and a PDSN identifier identifying the first PDSN (302);
sending an access accept message (326) to the second PDSN (304) in response to the access request message (320); and
sending a disconnect request message (332, 402) to the first PDSN (302) via a second AAA server associated with a foreign network indicating a request to release resources associated with the session.

19. The method as recited in claim 18, wherein the disconnect request message 332, 402) further indicates that the resources associated with the session are no longer needed.

20. The method as recited in claim 18, wherein the disconnect request message (332, 402) further indicates that a node associated with the user has moved.

21. The method as recited in claim 20, wherein the node is a mobile node.

22. The method as recited in claim 18, wherein the disconnect request message (332, 402) requests that the first PDSN (302) disconnect the user for the session identified by the session identifier.

23. The method as recited in claim 18, wherein the AAA server is a home AAA server (308) associated with a home network of the user.

24. The method as recited in claim 18, wherein the disconnect request message (332, 402) comprises a source PDSN identifier identifying the first PDSN (302), a username identifier identifying a user associated with the Mobile Internet Protocol, IP, session, and a session identifier identifying a session associated with the user to be terminated by the first PDSN (302).

25. The method as recited in claim 24, wherein the session is a Point-to-Point Protocol, PPP, session.

26. The method as recited in claim 24, further comprising:
receiving a disconnect acknowledgement message (336, 404) from the first PDSN (302) indicating that the first PDSN (302) has successfully disconnected the user.

27. The method as recited in claim 24, further comprising:
receiving a disconnect non-acknowledgement message (336, 404) from the first PDSN (302) indicating that the first PDSN (302) is unable to disconnect the user.

28. A method performed in a first Authentication, Authorisation and Accounting, AAA, server (306) of initiating the release of resources in a first Packet Data Serving Node, PDSN, (304), comprising:
receiving an access accept message (314) from a second AAA server (308), the access accept message (314) including a username identifier identifying a user, a session identifier identifying a session associated with the user, and a PDSN identifier identifying the first PDSN (302); receiving a disconnect request message from the second AAA server; and,
sending the disconnect request message (332, 402) to the PDSN identifier identifying the first PDSN (302), the disconnect request message (332, 402) indicating a request to release resources associated with the session, wherein the second AAA server (308) is a home AAA server associated with a home network of the user, and the first AAA server (306) is a visited AAA server associated with a foreign network..

29. The method as recited in claim 28, wherein the disconnect request message (332, 402) further indicates that the resources associated with the session are no longer needed.

30. The method as recited in claim 28, wherein the disconnect request message (332, 402) further indicates that a node associated with the user has moved.

31. The method as recited in claim 30, wherein the node is a mobile node.

32. The method as recited in claim 28, wherein the disconnect request message (332, 402) requests that the first PDSN (302) disconnect the user for the session identified by the session identifier.

33. The method as recited in claim 28, wherein the disconnect request message comprises a source PDSN identifier identifying the first PDSN (302), a username identifier identifying a user associated with the Mobile Internet Protocol, IP, session, and a session identifier identifying a session associated with the user to be terminated by the first PDSN (302).

34. The method as recited in claim 33, wherein the session is a Point-to-Point Protocol, PPP, session.

35. The method as recited in claim 33, further comprising:
receiving a disconnect acknowledgement message (336, 404) from the first PDSN (302) indicating that the first PDSN (302) has successfully disconnected the user.

36. The method as recited in claim 33, further comprising:
receiving a disconnection non-acknowledgement message (336, 404) from the first PDSN (302) indicating that the first PDSN (302) is unable to disconnect the user.

37. The method as recited in claim 28, wherein the disconnect request message (336, 404) is sent when the access accept message is received by the first AAA server.

38. A computer program, product, comprising computer-readable instructions for performing, when executed by a computer, a method according to any preceding claim.

39. A Packet Data Serving Node, PDSN, (302), adapted for releasing resources, comprising:
means for sending an access request message to a first Authentication, Authorisation and Accounting, AAA, server for authentication of a node;
means for receiving an access accept message from the first AAA server;
means for establishing a Mobile Internet Protocol, IP, session as a Foreign Agent for the node when an access accept message is received from the first AAA server;
means for storing information associated with the node in resources associated with the PDSN (302);
means for receiving a disconnect request message (332, 402) from a first AAA server; wherein the disconnect request message (402) is received from a second AAA server (308) via the first AAA server (306), and the first AAA server is a visited AAA server associated with a foreign network.
means for releasing the resources when the disconnect request message is received.

40. An Authentication, Authorisation and Accounting, AAA, server (306, 308), adapted for initiating the release of resources in a first Packet Data Serving Node, PDSN, (302), comprising:
a processor (1563); and
a memory (1561, 1565), at least one of the processor (1563) and the memory (1561, 1565) being adapted for:
receiving an access request message (320) from a second PDSN (304), the access request message (320) including a username identifier identifying a user, a session identifier identifying a session associated with the user, and a PDSN identifier identifying the first PDSN (204);
sending an access accept message (326) to the second PDSN (304) in response to the access request message (320); and
sending a disconnect request message (337, 402) to the first PDSN (302) wherein the disconnect request message (402) is received from a second AAA server (308) via the first AAA server (306), and the first AAA server is a visited AAA server associated with a foreign network indicating a request to release resources associated with the session.

41. An Authentication, Authorisation and Accounting, AAA, (306), server adapted for initiating the release of resources in a first Packet Data Serving Node, PDSN, (302), comprising:
a processor (1563); and
a memory (1561, 1565), at least one of the processor (1563) and the memory (1561, 1565) being adapted for:
receiving an access accept message (324) from a second AAA server (308), the access accept message (324) including a username identifier identifying a user, a session identifier identifying a session associated with the user, and a PDSN identifier identifying the first PDSN (302); and receiving a disconnect request message from the second AAA server; and,
sending a disconnect request message (332, 402) to the PDSN identifier identifying the first PDSN (302), the disconnect request message (332, 402) indicating a request to release resources associated with the session, wherein the second AAA server (308) is a home AAA server associated with a home network of the user, and the first AAA server (306) is a visited AAA server associated with a foreign network.

## Patentansprüche

1. Verfahren zum Freigeben von Ressourcen, das in einem Paketdatendienstknoten bzw. PDSN (Packet Data Serving Node) (302) durchgeführt wird und das Folgendes umfasst:
Senden einer Access-Request-Nachricht (Zugriffsanforderungsnachricht) (310) zu einem ersten Authentifizierungs-, Autorisierungs- und Abrechnungs-Server bzw. AAA-Server (306) zur Authentifizierung eines Knotens;
Empfangen einer Access-Accept-Nachricht (Zugriffsannahmenachricht) (316) von dem ersten AAA-Server (306);
Aufbauen einer Mobile Internet Protocol Sitzung bzw. Mobile-IP-Sitzung als ein Foreign Agent (Fremdagent) für den Knoten, wenn eine Access-Accept-Nachricht von dem ersten AAA-Server (306) empfangen wird;
Speichern von Informationen, die mit dem Knoten assoziiert sind, in Ressourcen, die mit dem PDSN (302) assoziiert sind;
Empfangen einer Disconnect-Request-Nachricht (Trennungsanforderungsnachricht) (332, 402) von dem ersten AAA-Server, wobei die Disconnect-Request-Nachricht (402) von einem zweiten AAA-Server (308) über den ersten AAA-Server (306) empfangen wird und der erste AAA-Server ein besuchter AAA-Server ist, der mit einem fremden Netzwerk assoziiert ist; und
Freigeben der Ressourcen, wenn die Disconnect-Request-Nachricht (332, 402) empfangen wird.

2. Verfahren nach Anspruch 1, wobei der Ressourcenfreigabeschritt das Freigeben von Speicher umfasst, und wobei der Informationsspeicherungsschritt das Speichern von Point-to-Point Protocol (Punkt-zu-Punkt-Protokoll) Informationen bzw. PPP-Informationen umfasst, die mit einer PPP-Sitzung assoziiert sind.

3. Verfahren nach Anspruch 1, wobei der Ressourcenfreigabeschritt das Freigeben von Speicher umfasst, und wobei der Informationsspeicherungsschritt das Speichern von Informationen umfasst, die mit der Mobile-IP-Sitzung assoziiert sind.

4. Verfahren nach Anspruch 1, wobei der erste AAA-Server (306) ein besuchter AAA-Server ist, der mit einem fremden Netzwerk assoziiert ist, und der zweite AAA-Server (308) ein Heim-AAA-Server ist, der mit einem Heimnetzwerk des Knotens assoziiert ist.

5. Verfahren nach Anspruch 1, wobei der erste AAA-Server (306) ein besuchter AAA-Server ist, der mit einem fremden Netzwerk assoziiert ist, und der zweite AAA-Server (308) der besuchte AAA-Server ist, der mit dem fremden Netzwerk assoziiert ist.

6. Verfahren nach Anspruch 1, wobei die Access-Request-Nachricht und die Access-Reply-Nachricht (Zugriffsantwortnachricht) Remote Authentication Dial In User Service (Authentifizierungsdienst für sich einwählende Benutzer) Nachrichten bzw. RADIUS-Nachrichten sind und die ersten und zweiten AAA-Server (306, 308) RADILTS-Server sind.

7. Verfahren nach Anspruch 1, wobei die Disconnect-Request-Nachricht (332, 402) eine Ursprungs-PDSN-Kennung, die den PDSN (302) identifiziert, eine Benutzernamenkennung, die einen Benutzer identifiziert, der mit der Mobile-IP-Sitzung assoziiert ist, und eine Sitzungskennung umfasst, die eine Sitzung identifiziert, die mit dem Benutzer assoziiert ist und die von dem PDSN (302) beendet werden soll.

8. Verfahren nach Anspruch 7, wobei die Sitzung eine PPP-Sitzung ist.

9. Verfahren nach Anspruch 1, wobei die Disconnect-Request-Nachricht (402) durch eine zweite Access-Request-Nachricht (320) ausgelöst wird, die zu dem zweiten AAA-Server (308) von einem zweiten PDSN (304) gesendet wird, zu dem der Knoten gewandert ist.

10. Verfahren nach Anspruch 9, wobei die Disconnect-Request-Nachricht (402) gesendet wird, nachdem eine Access-Accept-Nachricht (324) von dem zweiten AAA-Server (308) zu dem ersten AAA-Server (306) gesendet worden ist.

11. Verfahren nach Anspruch 9, wobei die Access-Request-Nachricht (310) und die zweite Access-Request-Nachricht (320) jeweils eine RADILTS-Access-Request-Nachricht enthalten, die eine Benutzernamenkennung, die einen Benutzer identifiziert, der mit der Mobile-IP-Sitzung assoziiert ist, eine Sitzungskennung, die eine Sitzung identifiziert, die mit dem Benutzer assoziiert ist, und eine PDSN-Kennung umfasst, die den PDSN (302) identifiziert.

12. Verfahren nach Anspruch 1, das des Weiteren Folgendes umfasst:
Senden einer Disconnect-Acknowledgement-Nachricht (Trennungsbestätigungsnachricht) (336, 404), die angibt, dass der PDSN (304) den Benutzer erfolgreich abgetrennt hat.

13. Verfahren nach Anspruch 12, wobei die Disconnect-Acknowledgement-Nachricht (336, 404) zu dem ersten AAA-Server (306) gesendet wird.

14. Verfahren nach Anspruch 1, das des Weiteren Folgendes umfasst:
Senden einer Disconnect-Acknowledgement-Nachricht (338) zu dem zweiten AAA-Server (308), wobei die Disconnect-Acknowledgement-Nachricht (338) angibt, dass der PDSN (302) den Benutzer erfolgreich abgetrennt hat.

15. Verfahren nach Anspruch 1, das des Weiteren Folgendes umfasst:
Senden einer Disconnect-Non-Acknowledgement-Nachricht (Trennungs-Nicht-Bestätigungs-Nachricht) (336, 404), die angibt, dass der PDSN (302) nicht in der Lage ist, den Benutzer abzutrennen.

16. Verfahren nach Anspruch 15, wobei die Disconnect-Non-Acknowledgement-Nachricht (336, 404) zu dem ersten AAA-Server (306) gesendet wird.

17. Verfahren nach Anspruch 1, das des Weiteren Folgendes umfasst:
Senden einer Disconnect-Non-Acknowledgement-Nachricht (338) zu dem zweiten AAA-Server (308), wobei die Disconnect-Non-Acknowledgement-Nachricht (338) angibt, dass der PDSN (302) nicht in der Lage ist, den Benutzer abzutrennen.

18. Verfahren, das in einem Authentifizierungs-, Autorisierungs- und Abrechnungs-Server bzw. AAA-Server (306, 308) zum Initiieren der Freigabe von Ressourcen in einem ersten Paketdatendienstknoten bzw. PDSN (302) durchgeführt wird und Folgendes umfasst:
Empfangen einer Access-Request-Nachricht (320) von einem zweiten PDSN (304), wobei die Access-Request-Nachricht (320) eine Benutzernamenkennung, die einen Benutzer identifiziert, eine Sitzungskennung, die eine Sitzung identifiziert, die mit dem Benutzer assoziiert ist, und eine PDSN-Kennung umfasst, die den ersten PDSN (302) identifiziert;
Senden einer Access-Accept-Nachricht (326) zu dem zweiten PDSN (304) in Reaktion auf die Access-Request-Nachricht (320); und
Senden einer Disconnect-Request-Nachricht (332, 402) zu dem ersten PDSN (302) über einen zweiten AAA-Server, der mit einem fremden Netzwerk assoziiert ist, die eine Anforderung zum Freigeben von Ressourcen, die mit der Sitzung assoziiert sind, angibt.

19. Verfahren nach Anspruch 18, wobei die Disconnect-Request-Nachricht (332, 402) des Weiteren angibt, dass die Ressourcen, die mit der Sitzung assoziiert sind, nicht mehr länger benötigt werden.

20. Verfahren nach Anspruch 18, wobei die Disconnect-Request-Nachricht (332, 402) des Weiteren angibt, dass sich ein Knoten, der mit dem Benutzer assoziiert ist, bewegt hat.

21. Verfahren nach Anspruch 20, wobei der Knoten ein mobiler Knoten ist.

22. Verfahren nach Anspruch 18, wobei die Disconnect-Request-Nachricht (332, 402) anfordert, dass der erste PDSN (302) den Benutzer für die Sitzung, die von der Sitzungskennung identifiziert wird, abtrennt.

23. Verfahren nach Anspruch 18, wobei der AAA-Server ein Heim-AAA-Server (308) ist, der mit einem Heimnetzwerk des Benutzers assoziiert ist.

24. Verfahren nach Anspruch 18, wobei die Disconnect-Request-Nachricht (332, 402) eine Ursprungs-PDSN-Kennung, die den ersten PDSN (302) identifiziert, eine Benutzernamenkennung, die einen Benutzer identifiziert, der mit der Mobile Internet Protocol Sitzung bzw. Mobile-IP-Sitzung assoziiert ist, und eine Sitzungskennung umfasst, die eine Sitzung identifiziert, die mit dem Benutzer assoziiert ist und die von dem ersten PDSN (302) beendet werden soll.

25. Verfahren nach Anspruch 24, wobei die Sitzung eine Point-to-Point Protocol Sitzung bzw. PPP-Sitzung ist.

26. Verfahren nach Anspruch 24, das des Weiteren Folgendes umfasst:
Empfangen einer Disconnect-Acknowledgement-Nachricht (336, 404) von dem ersten PDSN (302), die angibt, dass der erste PDSN (302) den Benutzer erfolgreich abgetrennt hat.

27. Verfahren nach Anspruch 24, das des Weiteren Folgendes umfasst:
Empfangen einer Disconnect-Non-Acknowledgement-Nachricht (336, 404) von dem ersten PDSN (302), die angibt, dass der erste PDSN (302) nicht in der Lage ist, den Benutzer abzutrennen.

28. Verfahren, das in einem ersten Authentifizierungs-, Autorisierungs- und Abrechnungs-Server bzw. AAA-Server (306) zum Initiieren der Freigabe von Ressourcen in einem ersten Paketdatendienstknoten bzw. PDSN (304) durchgeführt wird und Folgendes umfasst:
Empfangen einer Access-Accept-Nachricht (314) von einem zweiten AAA-Server (308), wobei die Access-Accept-Nachricht (314) eine Benutzernamenkennung, die einen Benutzer identifiziert, eine Sitzungskennung, die eine Sitzung identifiziert, die mit dem Benutzer assoziiert ist, und eine PDSN-Kennung umfasst, die den ersten PDSN (302) identifiziert; Empfangen einer Disconnect-Request-Nachricht von dem zweiten AAA-Server; und
Senden der Disconnect-Request-Nachricht (332, 402) zu der PDSN-Kennung, die den ersten PDSN (302) identifiziert, wobei die Disconnect-Request-Nachricht (332, 402) eine Anforderung zum Freigeben von Ressourcen, die mit der Sitzung assoziiert sind, angibt, wobei der zweite AAA-Server (308) ein Heim-AAA-Server ist, der mit einem Heimnetzwerk des Benutzers assoziiert ist, und der erste AAA-Server (306) ein besuchter AAA-Server ist, der mit einem fremden Netzwerk assoziiert ist.

29. Verfahren nach Anspruch 28, wobei die Disconnect-Request-Nachricht (332, 402) des Weiteren angibt, dass die Ressourcen, die mit der Sitzung assoziiert sind, nicht mehr länger benötigt werden.

30. Verfahren nach Anspruch 28, wobei die Disconnect-Request-Nachricht (332, 402) des Weiteren angibt, dass sich ein Knoten, der mit dem Benutzer assoziiert ist, bewegt hat.

31. Verfahren nach Anspruch 30, wobei der Knoten ein mobiler Knoten ist.

32. Verfahren nach Anspruch 28, wobei die Disconnect-Request-Nachricht (332, 402) anfordert, dass der erste PDSN (302) den Benutzer für die Sitzung, die durch die Sitzungskennung identifiziert ist, abtrennt.

33. Verfahren nach Anspruch 28, wobei die Disconnect-Request-Nachricht eine Ursprungs-PDSN-Kennung, die den ersten PDSN (302) identifiziert, eine Benutzernamenkennung, die einen Benutzer identifiziert, der mit der Mobile Internet Protocol Sitzung bzw. Mobile-IP-Sitzung assoziiert ist, und eine Sitzungskennung umfasst, die eine Sitzung identifiziert, die mit dem Benutzer assoziiert ist und die von dem ersten PDSN (302) beendet werden soll.

34. Verfahren nach Anspruch 33, wobei die Sitzung eine Point-to-Point Protocol Sitzung bzw. PPP-Sitzung ist.

35. Verfahren nach Anspruch 33, das des Weiteren Folgendes umfasst:
Empfangen einer Disconnect-Acknowledgement-Nachricht (336, 404) von dem ersten PDSN (302), die angibt, dass der erste PDSN (302) den Benutzer erfolgreich abgetrennt hat.

36. Verfahren nach Anspruch 33, das des Weiteren Folgendes umfasst:
Empfangen einer Disconnect-Non-Acknowledgement-Nachricht (336, 404) von dem ersten PDSN (302), die angibt, dass der erste PDSN (302) nicht in der Lage ist, den Benutzer abzutrennen.

37. Verfahren nach Anspruch 28, wobei die Disconnect-Request-Nachricht (336, 404) gesendet wird, wenn die Access-Accept-Nachricht von dem ersten AAA-Server empfangen wird.

38. Computerprogrammerzeugnis, das computerlesbare Befehle zum, wenn sie von einem Computer ausgeführt werden, Durchführen eines Verfahrens nach einem der vorhergehenden Ansprüche aufweist.

39. Paketdatendienstknoten bzw. PDSN (Packet Data Serving Node) (302), der dafür ausgelegt ist, Ressourcen freizugeben, und der Folgendes aufweist:
eine Einrichtung zum Senden einer Access-Request-Nachricht zu einem ersten Authentifizierungs-, Autorisierungs- und Abrechnungs-Server bzw. AAA-Server zur Authentifizierung eines Knotens;
eine Einrichtung zum Empfangen einer Access-Accept-Nachricht von dem ersten AAA-Server;
eine Einrichtung zum Aufbauen einer Mobile Internet Protocol Sitzung bzw. Mobile-IP-Sitzung als ein Foreign Agent für den Knoten, wenn eine Access-Accept-Nachricht von dem ersten AAA-Server empfangen wird;
eine Einrichtung zum Speichern von Informationen, die mit dem Knoten assoziiert sind, in Ressourcen, die mit dem PDSN (302) assoziiert sind;
eine Einrichtung zum Empfangen einer Disconnect-Request-Nachricht (332, 402) von einem ersten AAA-Server; wobei die Disconnect-Request-Nachricht (402) von einem zweiten AAA-Server (308) über den ersten AAA-Server (306) empfangen wird und der erste AAA-Server ein besuchter AAA-Server ist, der mit einem fremden Netzwerk assoziiert ist;
eine Einrichtung zum Freigeben der Ressourcen, wenn die Disconnect-Request-Nachricht empfangen wird.

40. Authentifizierungs-, Autorisierung- und Abrechnungs-Server bzw. AAA-Server (306, 308), der dafür ausgelegt ist, die Freigabe von Ressourcen in einem ersten Paketdatendienstknoten bzw. PDSN (Packet Data Serving Node) (302) zu initiieren, und der Folgendes aufweist:
einen Prozessor (1563); und
einen Speicher (1561, 1565), wobei wenigstens einer von dem Prozessor (1563) und dem Speicher (1561, 1565) ausgelegt ist zum:
Empfangen einer Access-Request-Nachricht (320) von einem zweiten PDSN (304), wobei die Access-Request-Nachricht (320) eine Benutzernamenkennung, die einen Benutzer identifiziert, eine Sitzungskennung, die eine Sitzung identifiziert, die mit dem Benutzer assoziiert ist, und eine PDSN-Kennung umfasst, die den ersten PDSN (204) identifiziert;
Senden einer Access-Accept-Nachricht (326) zu dem zweiten PDSN (304) in Reaktion auf die Access-Request-Nachricht (320); und
Senden einer Disconnect-Request-Nachricht (337, 402) zu dem ersten PDSN (302), wobei die Disconnect-Request-Nachricht (402) von einem zweiten AAA-Server (308) über den ersten AAA-Server (306) empfangen wird und der erste AAA-Server ein besuchter AAA-Server ist, der mit einem fremden Netzwerk assoziiert ist, und sie eine Anforderung zum Freigeben von Ressourcen, die mit der Sitzung assoziiert sind, angibt.

41. Authentifizierungs-, Autorisierung- und Abrechnungs-Server bzw. AAA-Server (306), der dafür ausgelegt ist, die Freigabe von Ressourcen in einem ersten Paketdatendienstknoten bzw. PDSN (Packet Data Serving Node) (302) zu initiieren, und der Folgendes aufweist:
einen Prozessor (1563); und
einen Speicher (1561, 1565), wobei wenigstens einer von dem Prozessor (1563) und dem Speicher (1561, 1565) ausgelegt ist zum:
Empfangen einer Access-Accept-Nachricht (324) von einem zweiten AAA-Server (308), wobei die Access-Accept-Nachricht (324) eine Benutzernamenkennung, die einen Benutzer identifiziert, eine Sitzungskennung, die eine Sitzung identifiziert, die mit dem Benutzer assoziiert ist, und eine PDSN-Kennung umfasst, die den ersten PDSN (302) identifiziert; und Empfangen einer Disconnect-Request-Nachricht von dem zweiten AAA-Server; und
Senden einer Disconnect-Request-Nachricht (332, 402) zu der PDSN-Kennung, die den ersten PDSN (302) identifiziert, wobei die Disconnect-Request-Nachricht (332, 402) eine Anforderung zum Freigeben von Ressourcen, die mit der Sitzung assoziiert sind, angibt, wobei der zweite AAA-Server (308) ein Heim-AAA-Server ist, der mit einem Heimnetzwerk des Benutzers assoziiert ist, und der erste AAA-Server (306) ein besuchter AAA-Server ist, der mit einem fremden Netzwerk assoziiert ist.

## Revendications

1. Procédé de libération de ressources effectué dans un noeud de service de données par paquets, PDSN, (302) et comprenant :
l'envoi d'un message de demande d'accès (310) à un premier serveur d'authentification, d'autorisation et de comptabilité, AAA (306), pour l'authentification d'un noeud ;
la réception d'un message d'acceptation d'accès (316) provenant du premier serveur AAA (306) ;
l'établissement d'une session de protocole Internet mobile, IP, en tant qu'agent étranger pour le noeud lors de la réception d'un message d'acceptation d'accès provenant du premier serveur AAA (306) ;
le stockage d'informations associées au noeud dans des ressources associées au PDSN (302) ;
la réception d'un message de demande de déconnexion (332, 402) provenant du premier serveur AAA, le message de demande de déconnexion (402) étant reçu d'un second serveur AAA (308) via le premier serveur AAA (306), et le premier serveur AAA étant un serveur AAA visité associé à un réseau étranger ; et
la libération de ressources lors de la réception du message de demande de déconnexion (332, 402).

2. Procédé selon la revendication 1, dans lequel l'étape de libération de ressources comprend la libération de mémoire et l'étape de stockage d'informations comprend le stockage d'informations de protocole point à point, PPP, associées à une session PPP.

3. Procédé selon la revendication 1, dans lequel l'étape de libération de ressources comprend la libération de mémoire et l'étape de stockage d'informations comprend le stockage d'informations associées à la session IP mobile.

4. Procédé selon la revendication 1, dans lequel le premier serveur AAA (306) est un serveur AAA visité associé à un réseau étranger et le second serveur AAA (308) est un serveur AAA domestique associé à un réseau domestique du noeud.

5. Procédé selon la revendication 1, dans lequel le premier serveur AAA (306) est un serveur AAA visité associé à un réseau étranger et le second serveur AAA (308) est le serveur AAA visité associé au réseau étranger.

6. Procédé selon la revendication 1, dans lequel le message de demande d'accès et le message de réponse concernant l'accès sont des messages du service d'authentification à distance des utilisateurs, RADIUS, et les premier et second serveurs AAA (306, 308) sont des serveurs RADIUS.

7. Procédé selon la revendication 1, dans lequel le message de demande de déconnexion (332, 402) comprend un identifiant de PDSN source qui identifie le PDSN (302), un identifiant de nom d'utilisateur qui identifie un utilisateur associé à la session IP mobile, et un identifiant de session qui identifie une session associée à l'utilisateur à laquelle le PDSN (302) doit mettre fin.

8. Procédé selon la revendication 7, dans lequel la session est une session PPP.

9. Procédé selon la revendication 1, dans lequel le message de demande de déconnexion (402) est déclenché par un second message de demande d'accès (320) envoyé au second serveur AAA (308) par un second PDSN (304) vers lequel le noeud s'est déplacé par itinérance.

10. Procédé selon la revendication 9, dans lequel le message de demande de déconnexion (402) est envoyé après l'envoi d'un message d'acceptation d'accès (324) par le second serveur AAA (308) au premier serveur AAA (306) .

11. Procédé selon la revendication 9, dans lequel le message de demande d'accès (310) et le second message de demande d'accès (320) comprennent chacun un message de demande d'accès RADIUS comprenant un identifiant de nom d'utilisateur qui identifie un utilisateur associé à la session IP mobile, un identifiant de session qui identifie une session associée à l'utilisateur, et un identifiant de PDSN qui identifie le PDSN (302).

12. Procédé selon la revendication 1, comprenant en outre .
l'envoi d'un message d'acquittement de déconnexion (336, 404) indiquant que le PDSN (304) a réussi à déconnecter l'utilisateur.

13. Procédé selon la revendication 12, dans lequel le message d'acquittement de déconnexion (336, 404) est envoyé au premier serveur AAA (306).

14. Procédé selon la revendication 1, comprenant en outre :
l'envoi d'un message d'acquittement de déconnexion (338), au second serveur AAA (308), le message d'acquittement de déconnexion (338) indiquant que le PDSN (302) a réussi à déconnecter l'utilisateur.

15. Procédé selon la revendication 1, comprenant en outre :
l'envoi d'un message de non acquittement de déconnexion (336, 404) indiquant que le PDSN (302) ne parvient pas à déconnecter l'utilisateur.

16. Procédé selon la revendication 15, dans lequel le message de non acquittement de déconnexion (336, 404) est envoyé au premier serveur AAA (306).

17. Procédé selon la revendication 1, comprenant en outre :
l'envoi d'un message de non acquittement de déconnexion (338) au second serveur AAA (308), le message de non acquittement de déconnexion (338) indiquant que le PDSN (302) ne parvient pas à déconnecter l'utilisateur.

18. Procédé effectué dans un serveur d'authentification, d'autorisation et de comptabilité, AAA (306, 308), destiné à lancer la libération de ressources dans un premier noeud de service de données par paquets, PDSN, (302) et comprenant :
la réception d'un message de demande d'accès (320) provenant d'un second PDSN (304), le message de demande d'accès (320) comprenant un identifiant de nom d'utilisateur qui identifie un utilisateur, un identifiant de session qui identifie une session associée à l'utilisateur, et un identifiant de PDSN qui identifie le premier PDSN (302) ;
l'envoi d'un message d'acceptation d'accès (326) au second PDSN (304) en réponse au message de demande d'accès (320) ; et
l'envoi d'un message de demande de déconnexion (332, 402) au premier PDSN (302) via un second serveur AAA associé à un réseau étranger, indiquant une demande de libération de ressources associées à la session.

19. Procédé selon la revendication 18, dans lequel le message de demande de déconnexion (332, 402) indique en outre que les ressources associées à la session ne sont plus nécessaires.

20. Procédé selon la revendication 18, dans lequel le message de demande de déconnexion (332, 402) indique en outre qu'un noeud associé à l'utilisateur s'est déplacé.

21. Procédé selon la revendication 20, dans lequel le noeud est un noeud mobile.

22. Procédé selon la revendication 18, dans lequel le message de demande de déconnexion (332, 402) demande que le premier PDSN (302) déconnecte l'utilisateur pour la session identifiée par l'identifiant de session.

23. Procédé selon la revendication 18, dans lequel le serveur AAA est un serveur AAA domestique (308) associé à un réseau domestique de l'utilisateur.

24. Procédé selon la revendication 18, dans lequel le message de demande de déconnexion (332, 402) comprend un identifiant de PDSN source qui identifie le premier PDSN (302), un identifiant de nom d'utilisateur qui identifie un utilisateur associé à la session de protocole Internet mobile, IP, et un identifiant de session qui identifie une session associée à l'utilisateur à laquelle le premier PDSN (302) doit mettre fin.

25. Procédé selon la revendication 24, dans lequel la session est une session de protocole point à point, PPP.

26. Procédé selon la revendication 24, comprenant en outre :
la réception d'un message d'acquittement de déconnexion (336, 404) provenant du premier PDSN (302) et indiquant que le premier PDSN (302) a réussi à déconnecter l'utilisateur.

27. Procédé selon la revendication 24, comprenant en outre :
la réception d'un message de non acquittement de déconnexion (336, 404) provenant du premier PDSN (302) et indiquant que le premier PDSN (302) ne parvient pas à déconnecter l'utilisateur.

28. Procédé effectué dans un premier serveur d'authentification, d'autorisation et de comptabilité, AAA, (306), destiné à lancer la libération de ressources dans un premier noeud de service de données par paquets, PDSN, (304), et comprenant :
la réception d'un message d'acceptation d'accès (314) provenant d'un second serveur AAA (308), le message d'acceptation d'accès (314) comprenant un identifiant de nom d'utilisateur qui identifie un utilisateur, un identifiant de session qui identifie une session associée à l'utilisateur, et un identifiant de PDSN qui identifie le premier PDSN (302) ; la réception d'un message de demande de déconnexion provenant du second serveur AAA ; et
l'envoi du message de demande de déconnexion (332, 402) à l'identifiant de PDSN qui identifie le premier PDSN (302), le message de demande de déconnexion (332, 402) indiquant une demande de libération de ressources associées à la session, le second serveur AAA (308) étant un serveur AAA domestique associé à un réseau domestique de l'utilisateur, et le premier serveur AAA (306) étant un serveur AAA visité associé à un réseau étranger.

29. Procédé selon la revendication 28, dans lequel le message de demande de déconnexion (332, 402) indique en outre que les ressources associées à la session ne sont plus nécessaires.

30. Procédé selon la revendication 28, dans lequel le message de demande de déconnexion (332, 402) indique en outre qu'un noeud associé à l'utilisateur s'est déplacé.

31. Procédé selon la revendication 30, dans lequel le noeud est un noeud mobile.

32. Procédé selon la revendication 28, dans lequel le message de demande de déconnexion (332, 402) demande que le premier PDSN (302) déconnecte l'utilisateur pour la session identifiée par l'identifiant de session.

33. Procédé selon la revendication 28, dans lequel le message de demande de déconnexion comprend un identifiant de PDSN source qui identifie le premier PDSN (302), un identifiant de nom d'utilisateur qui identifie un utilisateur associé à la session de protocole Internet mobile, IP, et un identifiant de session qui identifie une session associée à l'utilisateur à laquelle le premier PDSN (302) doit mettre fin.

34. Procédé selon la revendication 33, dans lequel la session est une session de protocole point à point, PPP.

35. Procédé selon la revendication 33, comprenant en outré :
la réception d'un message d'acquittement de déconnexion (336, 404) provenant du premier PDSN (302) et indiquant que le premier PDSN (302) a réussi à déconnecter l'utilisateur.

36. Procédé selon la revendication 33, comprenant en outre :
la réception d'un message de non acquittement de déconnexion (336, 404) provenant du premier PDSN (302) et indiquant que le premier PDSN (302) ne parvient pas à déconnecter l'utilisateur.

37. Procédé selon la revendication 28, dans lequel le message de demande de déconnexion (336, 404) est envoyé lors de la réception du message d'acceptation d'accès par le premier serveur AAA.

38. Produit-programme informatique comprenant des instructions lisibles par ordinateur et destiné à effectuer, lors de son exécution par un ordinateur, un procédé selon l'une quelconque des revendications précédentes.

39. Noeud de service de données par paquets, PDSN, (302), adapté à la libération de ressources et comprenant :
des moyens permettant l'envoi d'un message de demande d'accès à un premier serveur d'authentification, d'autorisation et de comptabilité, AAA, pour l'authentification d'un noeud ;
des moyens permettant la réception d'un message d'acceptation d'accès provenant du premier serveur AAA ;
des moyens permettant l'établissement d'une session de protocole Internet mobile, IP, en tant qu'agent étranger pour le noeud lors de la réception d'un message d'acceptation d'accès provenant du premier serveur AAA ;
des moyens permettant le stockage d'informations associées au noeud dans des ressources associées au PDSN (302) ;
des moyens permettant la réception d'un message de demande de déconnexion (332, 402) provenant d'un premier serveur AAA ; le message de demande de déconnexion (402) étant reçu d'un second serveur AAA (308) via le premier serveur AAA (306), et le premier serveur AAA étant un serveur AAA visité associé à un réseau étranger ; et
des moyens permettant la libération des ressources lors de la réception du message de demande de déconnexion.

40. Serveur d'authentification, d'autorisation et de comptabilité, AAA (306, 308), adapté au lancement de la libération de ressources dans un premier noeud de service de données par paquets, PDSN, (302), et comprenant :
un processeur (1563) ; et
une mémoire (1561, 1565), au moins l'un du processeur (1563) et de la mémoire (1561, 1565) étant adapté à :
la réception d'un message de demande d'accès (320) provenant d'un second PDSN (304), le message de demande d'accès (320) comprenant un identifiant de nom d'utilisateur qui identifie un utilisateur, un identifiant de session qui identifie une session associée à l'utilisateur, et un identifiant de PDSN qui identifie le premier PDSN (204) ;
l'envoi d'un message d'acceptation d'accès (326) au second PDSN (304) en réponse au message de demande d'accès (320) ; et
l'envoi d'un message de demande de déconnexion (337, 402) au premier PDSN (302), le message de demande de déconnexion (402) étant reçu d'un second serveur AAA (308) via le premier serveur AAA (306) et le premier serveur AAA étant un serveur AAA visité associé à un réseau étranger, indiquant une demande de libération de ressources associées à la session.

41. Serveur d'authentification, d'autorisation et de comptabilité, AAA, (306), adapté au lancement de la libération de ressources dans un premier noeud de service de données par paquets, PDSN, (302), et comprenant :
un processeur (1563) ; et
une mémoire (1561, 1565), au moins l'un du processeur (1563) et de la mémoire (1561, 1565) étant adapté à :
la réception d'un message d'acceptation d'accès (324) provenant d'un second serveur AAA (308), le message d'acceptation d'accès (324) comprenant un identifiant de nom d'utilisateur qui identifie un utilisateur, un identifiant de session qui identifie une session associée à l'utilisateur, et un identifiant de PDSN qui identifie le premier PDSN (302) ; et à la réception d'un message de demande de déconnexion provenant du second serveur AAA ; et à
l'envoi d'un message de demande de déconnexion (332, 402) à l'identifiant de PDSN qui identifie le premier PDSN (302), le message de demande de déconnexion (332, 402) indiquant une demande de libération de ressources associées à la session, le second serveur AAA (308) étant un serveur domestique AAA associé à un réseau domestique de l'utilisateur, et le premier serveur AAA (306) étant un serveur AAA visité associé à un réseau étranger.
